# EUROPEAN PATENT SPECIFICATION

(11) **EP 0 900 709 B1**
(45) Date of publication and mention of the grant of the patent: **17.05.2006**
(21) Application number: 98307101.0
(22) Date of filing: 03.09.1998
(51) Int. Cl.: B62B 7/08, B62B 9/20

(54) **Infant carriage**
Kinderwagen
Poussette pour enfants

(30) Priority: 04.09.1997 GB 9718676
(43) Date of publication of application: 10.03.1999
(73) Proprietor: Armon Limited, 1211 Geneva 3 (CH)
(72) Inventor: Riddiford, Martin, 2 Huntsworth Mews, London NW1 6DD (GB)
(74) Representative: Harman, Michael Godfrey

(56) References cited:
- BE-A- 830 672
- GB-A- 2 285 775
- GB-A- 191 328 053
- US-A- 4 019 757
- US-A- 5 290 055
- DATABASE WPI Section PQ, Week 7548 Derwent Publications Ltd., London, GB; Class Q22, AN 1975-M6961W XP002139686 & BE 830 672 A (VAN DEN BROECK), 16 October 1975 (1975-10-16)

## Description

### Technical Field

This invention relates to an infant carriage and, more particularly, to an infant carriage more commonly referred to as an umbrella-type folding buggy or pushchair.

### Background

Umbrella-type folding infant carriages are well known and commonly include a pair of side frames interconnected by rear and lower scissor links or X frames of interconnecting links. The arrangement of links allows the side frames to be foldable between an operating configuration, in which an infant may be supported between the spaced side frames in a seat arrangement suspended between the side frames, and a folded arrangement in which each of the side frames is typically collapsed in its own plane, and the two side frames moved closer together. Commercially available versions of carriages are configured so that the act of collapsing the side frames within their respective planes, draws the two frames into close juxtaposition.

Typically an upper end or part of each of the side frames terminates in a handle, such that when the carriage is in the operating configuration, two spaced handles are positioned in suitable locations for the carriage to be gripped manually, and propelled. When the carriage is to be folded, two safety catches are released and the handles rotated so as to collapse each frame in its plane. As stated above, this action typically also draws the two side frames together known as an umbrella fold to result in a compact folded condition.

The two spaced handles are therefore draw together as the push chair is folded and this results in a number of drawbacks. The two handles being separate from each other also brings about a number of drawbacks. Firstly, if the carriage is displaced by the application of a propelling force to only one of the handles, a steering moment is applied to the carriage which, if not resisted by wrist action, means the carriage cannot be propelled in a straight line. Further, folding the carriage requires both handles to be displaced together. This is not always easy if the user requires one hand to be used for other purposes simultaneously.

A system has been proposed (for invalid wheelchairs) which permits conversion between separate handles and a cross-bar handle. US 5 290 055 describes a wheel-chair with a cross-bar handle which can be attached over the normal left and right handles. The cross-bar handle may be telescopic and spring-loaded, to allow use with wheel-chairs of different widths.

Cross-bar handles which allow the side frames of the carriage to be drawn together are known in the prior art. BE 830 672 describes a foldable pushchair which has a handle having two L-shaped elements, hinged together by a hinge piece. A sleeve can be slid to cover the hinge, thereby holding the handle rigid, or to uncover the hinge piece and thereby permitting folding.

GB-A-2 285 775 describes a foldable pushchair having a cross-bar handrail made of three sections coupled together telescopically, comprising longitudinal guides between them to keep them in line with each other.

It is an object of this invention to provide a foldable carriage which addresses the aforementioned drawbacks or which at least presents a useful option over prior art carriages.

Accordingly, in one aspect, the invention comprises an infant carriage having a pair of spaced side frames foldable between an operating configuration in which an infant can be supported therebetween, and a folded configuration in which said side frames are moved closer together, and wherein the upper ends of said side frames have corresponding handle parts interconnected by variable length linking means telescopically engaging into a cover, characterized in that the cover has stop means which engage with corresponding notches in each handle part to prevent sliding of the corresponding handle parts when in the operating configuration of the carriage, the stop means being released from the corresponding notches when the carriage is folded.

The linking means preferably includes regulating means to ensure each side member is displaced by a substantially equal amount as said linking means telescopes inwardly. Whilst the regulating means could take a number of forms, it preferably comprises a rack and pinion type arrangement.

The linking means preferably comprises a pair of corresponding members mounted, in inverted mirror fashion, on the upper ends of tubular side members, a part of each identical member comprising a rack section, and wherein the two rack sections engage on opposite edges of a pinion rotatably mounted therebetween.

The linking means may further include a catch or the like to allow the extension thereof to be fixed in at least one, and preferably a multiplicity, of extensions.

The linking means may further include internal biasing means to bias said linking means towards an extended configuration.

Many variations of the invention will suggest themselves to those skilled in the art. The invention covered herein is to be limited solely by the claims appended hereto and not by the description of one preferred embodiment of the invention which follows.

### Brief Description of the Drawings

One specific embodiment of infant carriage embodying the invention will now be described with reference to the accompanying drawings in which:
- Figure 1:: shows a perspective view of an infant carriage embodying the invention, in an operating configuration;
- Figure 2:: shows an exploded perspective view of a number of components which combine to form linking means for incorporation into the infant carriage shown in Figure 1;
- Figure 3A:: shows a cross sectional view through the assembled components shown in Figure 2, in an extended configuration;
- Figure 3B:: shows a similar view to Figure 3A but with the assembled components in a retracted configuration;
- Figure 3C:: shows a vertical cross section through the pinion of figure 3A; and
- Figure 3D:: shows a horizontal cross section through one of the racks in schematic form.

### Detailed Description of One Embodiment

The present invention provides a modified form of the well-known umbrella-type folding infant carriage. To this end, in the conventional manner, the carriage 5 comprises a pair of laterally spaced side frames 6a, 6b supported on front wheel sets 7a, 7b and rear wheel sets 8a, 8b.

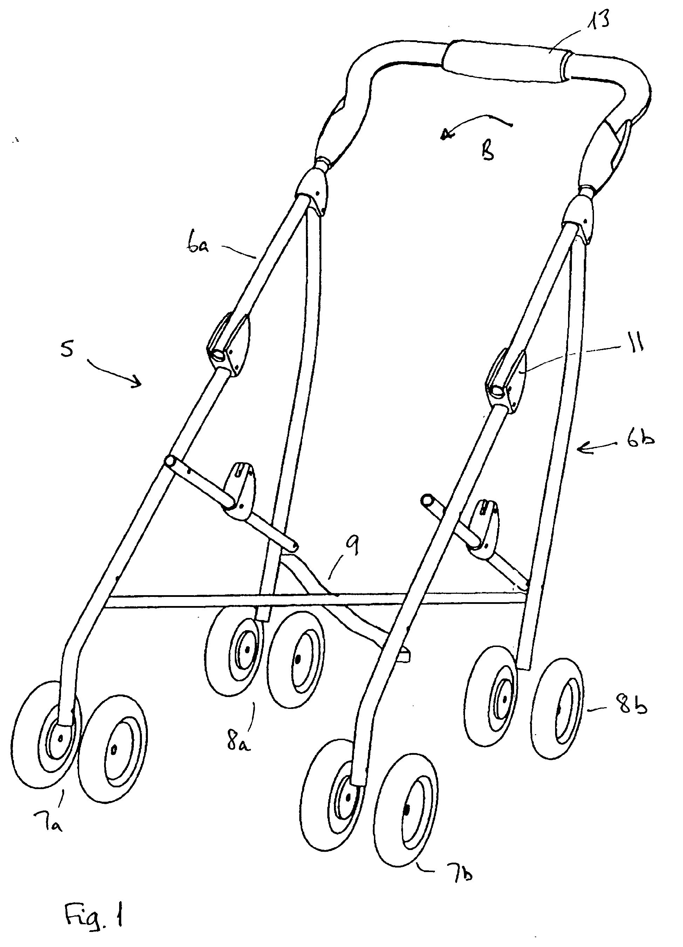

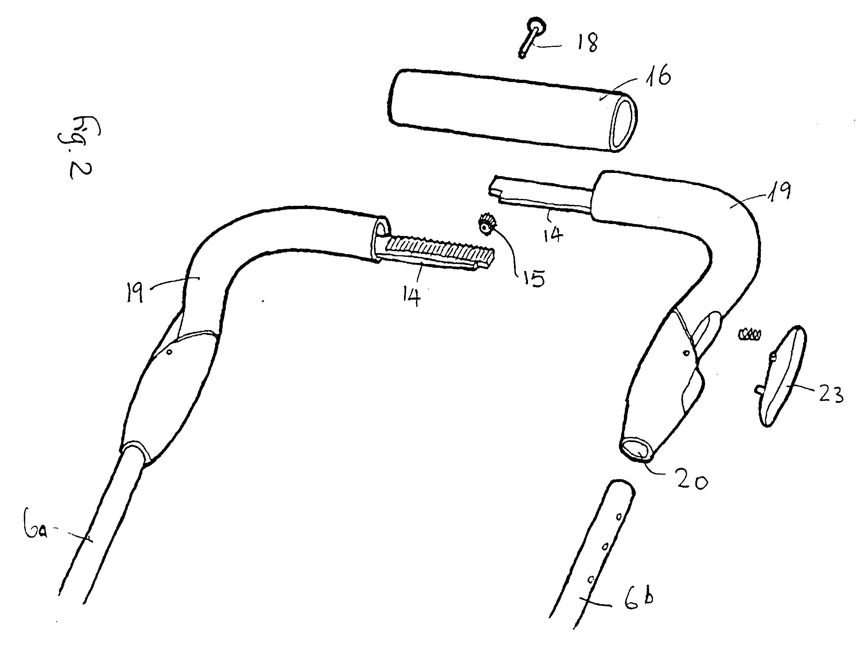

The side frames 6a, 6b are interconnected by a number of links including an X-frame 9 at the base region and usually a stand arrangement not shown at the rear of the carriage. Supported between the side frames 6a, 6b, when in the operating configuration shown in Figure 1, is an upholstered seat member (not shown) to firmly and securely support an infant occupant.

Also in the conventional manner, each side frame includes a rotating joint, or knuckle joint 11 approximately mid-way along the length thereof. Upon release of the locking mechanisms which maintain the carriage in the operating configuration, the upper part of each side frame may be folded about joints 11, in the direction indicated by arrow B, and in their respective planes, over the lower parts of the side frames. Because of the scissor links, such as the link 9, the action of folding upper parts over lower parts also draws the frames 6a, 6b laterally toward one another.

Conventionally, the upper end of each side frame 6a, 6b is fitted with a moulded handle, the two handles being positioned, when the carriage is in the operating configuration, in locations suitable for the average adult to manually grasp the handles and, thereby, propel the carriage along. This arrangement has certain drawbacks. Firstly, if the propelling force is applied through one handle alone, this causes a steering moment as the propelling force is offset from the central axis of the carriage. Further, when it is desired to fold the carriage, the folding action is preferably applied to both handles. This is often difficult as one hand is commonly occupied holding an infant, baggage, or the like.

The essence of the present invention lies in the provision of variable length linking means 13 between the side frames 6a, 6b at or adjacent the upper ends thereof. Being variable in length, the linking means not only allows the carriage to fold in the conventional manner, but also allows a propelling force to be applied to the carriage along the central axis thereof and permits the carriage to be folded using one hand.

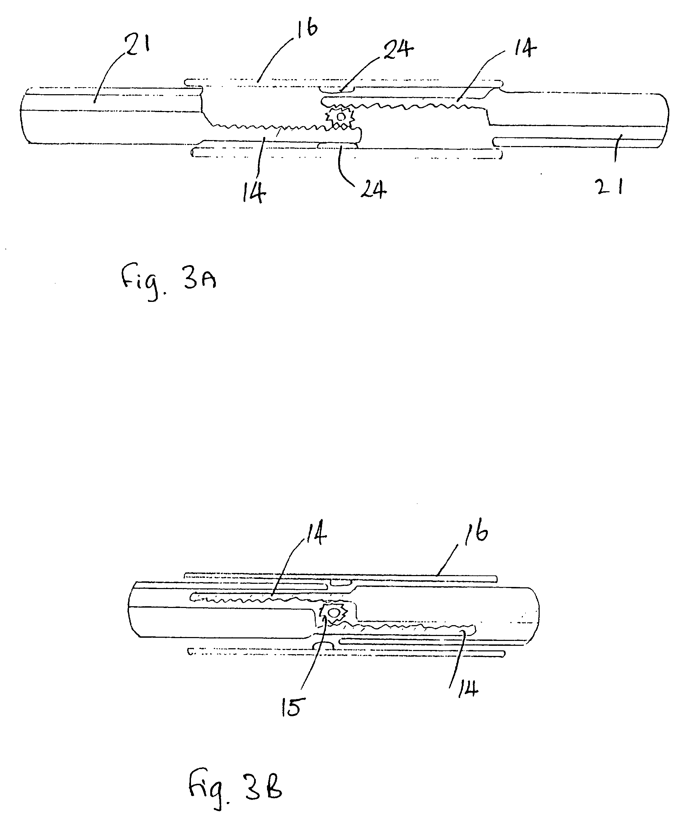

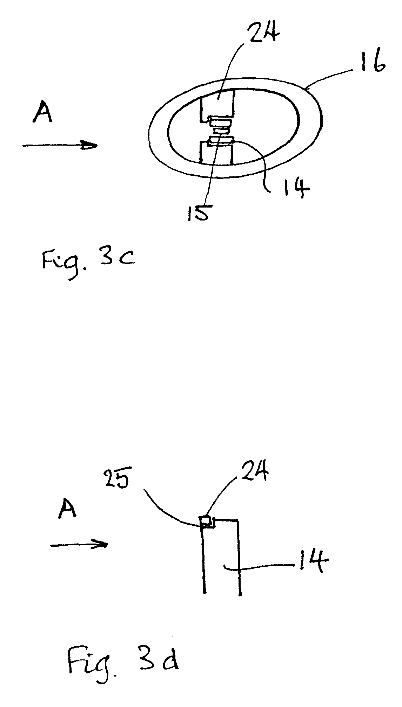

The variable length facility is preferably provided by making the linking means 13 telescopic in form. More_preferably, as shown in Figures 2, 3A , 3B, 3C and 3D the linking means includes a pair of rack members 14 acting on opposite sides of a common pinion 15. A cover moulding 16 preferably envelopes the racks and pinion and serves as a mounting base for the pinion 15 via central guide pin 18. This arrangement controls the respective lateral displacement of the side frames 6a, 6b and ensures that each displaces inwardly, evenly about the central axis of the carriage.

The rack members 14 extend from identical handle mouldings 19 which are mounted in inverted mirror fashion, through fixing sections 20, on opposite side frame members 6a, 6b. The handle mouldings 19 are thus adjustable in position along the length of the frame members 6a, 6b and fixable in the adjusted position by fixing means 23. Thus the height of the handle is adjustable by the user to suit the height of the user. The side frame members 6a, 6b include stops at their respective ends to prevent complete removal of the handle mouldings 19.

The mouldings 19 further include channels 21 to receive the rack of the other member 20, when the link is telescoped into the retracted configuration shown in Figure 3B.

The linking means may further include a catch (not shown) to allow the link to be locked in a variety of extensions within the outer and inner limits depicted in Figures 3A & 3B, and biasing means (not shown) to bias the link towards the fully extended configuration shown in Figure 3a.

In use, with the carriage in the operating configuration shown in figure 1, the carriage may be displaced in the conventional manner by applying a propelling force centrally against the cover 16 overlying the inter-engaged racks 14 and pinion 15. When it is desired to fold the carriage, the locking catches are released in the known manner, and a folding force applied, using one hand if necessary, to the centre of the cover 16 and in the direction of arrow 12. This folds the upper part of the carriage over the lower part whilst simultaneously collapsing the carriage laterally. As the carriage collapses laterally, the racks 14 enter channels 21, all within the cover 16.

In the open position the carriage of the invention is able to be displaced or pushed along during normal use as with a normal push chair with the advantage that the user has the full bar handle between the two side frames. The two side mouldings 19 are prevented from being pushed together during normal use, when it is not intended to fold the carriage by means of stop means 24 which are provided on the inside of the cover 16 and which engage, in the open position, with corresponding notches 25 in each of the two racks 14. When it is required to fold the carriage the stop 24 is released from the notches 25 by the collapsing sequence which causes the sides frames 6a, 6b to come together. As soon as they have come together by a small extent this has the effect of moving the handle mouldings 19 and correspondingly the racks 14 in the direction of arrow A in figures 3C and 3D and this releases the stop 25 from the notches 25 and the racks 14 is able to slide over the pinion 15 and the handle part collapses also.

It will thus be appreciated that the present invention provides a simple yet effective variation to the commonly encountered umbrella type folding infant carriage, which variation allows the carriage to be used and folded in an easy, single handed manner.

## Claims

1. An infant carriage (5) having a pair of spaced side frames (6a, 6b) foldable between an operating configuration in which an infant can be supported therebetween, and a folded configuration in which said side frames are moved closer together, and wherein the upper ends of said side frames have corresponding handle parts (19) interconnected by variable length linking means (13) telescopically engaging into a cover (16), **characterized in that** the cover has stop means (24) which engage with corresponding notches (25) in each handle part to prevent sliding of the corresponding handle parts when in the operating configuration of the carriage, the stop means (24) being released from the corresponding notches (25) when the carriage is folded.

2. A carriage as claimed in claim 1 wherein said linking means (13) includes regulating means to ensure that each side member is displaced by a substantially equal amount as said linking means (13), in use, varies in length.

3. A carriage as claimed in claim 2 wherein said regulating means comprises rack and pinion means (14,15).

4. A carriage as claimed in claim 3 wherein said linking means (13) comprises a pair of identical members mounted, in inverted mirror fashion, on the upper ends of side frames (6a, 6b), a part of each said identical member comprising a rack section (14), and wherein the two rack sections (14) engage on opposite edges of a pinion (15) mounted for rotation therebetween.

## Patentansprüche

1. Kinderwagen (5) mit einem Paar im Abstand voneinander angeordneten Seitenrahmen (6a, 6b), die zwischen einer Benutzerkonfiguration, in der ein Kleinkind zwischen ihnen einsitzen kann, und einer gefalteten Konfiguration, in der die besagten Seitenrahmen enger aufeinander zu bewegt werden können, faltbar ausgeführt sind, und bei der die Oberenden der besagten Seitenrahmen entsprechende Handgriffteile (19) aufweisen, die mit Verbindungsmitteln (13) von veränderbarer Länge teleskopisch in eine Abdeckung (16) eingreifend miteinander verbunden sind, **dadurch gekennzeichnet, dass** die Abdeckung Rastenmittel (24) aufweist, die in entsprechende Kerben (25) in dem jeweiligen Griffteil einrasten, so dass ein Gleiten der entsprechenden Handgriffteile in der Benutzerkonfiguration des Wagens verhindert wird, wobei sich die Rastenmittel (24) beim Zusammenfalten des Wagens aus den entsprechenden Kerben (25) lösen.

2. Wagen gemäß Anspruch 1, bei dem die besagten Verbindungsmittel (13) Regelmittel aufweisen, um zu gewährleisten, dass jedes Seitenglied im wesentlichen um den gleichen Weg verstellt wird, während das besagte Verbindungsmittel (13) während des Gebrauchs seine Länge ändert.

3. Wagen gemäß Anspruch 2, bei der es sich bei den besagten Regelmitteln um Zahnstangen- und Ritzelmittel (14, 15) handelt.

4. Wagen gemäß Anspruch 3, bei dem besagte Verbindungsmittel (13) aus einem Paar miteinander identischen, spiegelumgekehrt an den oberen Enden der Seitenrahmen (6a, 6b) angebrachten Gliedern bestehen, wobei ein Teil jedes der besagten identischen Glieder einen Zahnstangenabschnitt (14) enthält, und wobei die beiden Zahnstangenabschnitte (14) in gegenüberliegende Kanten eines drehbar zwischen ihnen montierten Ritzels (15) eingreifen.

## Revendications

1. Poussette pour enfants (5) ayant une paire de cadres latéraux espacés (6a, 6b) pliables entre une configuration de fonctionnement selon laquelle un petit enfant peut être supporté entre eux, et une configuration pliée selon laquelle lesdits cadres latéraux sont rapprochés ensemble, et dans laquelle les extrémités supérieures desdits cadres latéraux ont des parties correspondantes de type poignée (19) interconnectées par un moyen de liaison de longueur variable (13) s'engageant de manière télescopique dans un fourreau (16), **caractérisé en ce que** le fourreau est muni de moyens d'arrêt (24) qui s'engagent avec des crans correspondants (25) dans chaque partie de type poignée pour empêcher le coulissement des parties correspondantes de type poignée lorsque l'on est dans la configuration de fonctionnement de la poussette, les moyens d'arrêt (24) étant libérés des crans correspondants (25) quand la poussette est pliée.

2. Poussette selon la revendication 1, dans laquelle ledit moyen de liaison (13) comprend des moyens de réglage pour veiller à ce que chaque organe latéral soit déplacé d'une quantité dans une large mesure égale au fur et à mesure que ledit moyen de liaison (13), en cours d'utilisation, varie en longueur.

3. Poussette selon la revendication 2, dans laquelle ledit moyen de réglage comporte des moyens du type à crémaillère et pignon (14, 15).

4. Poussette selon la revendication 3, dans laquelle ledit moyen de liaison (13) comporte une paire d'organes identiques montés, d'une manière semblable à une image inversée, sur les extrémités supérieures des cadres latéraux (6a, 6b), une partie de chacun desdits organes identiques comportant une section de type crémaillère (14), et dans laquelle les deux sections de type crémaillère (14) s'engagent sur les bords opposés d'un pignon (15) monté à des fins de rotation entre elles.
